# EUROPEAN PATENT SPECIFICATION

(11) **EP 1 634 009 B1**
(45) Date of publication and mention of the grant of the patent: **19.01.2011**
(21) Application number: 04753430.0
(22) Date of filing: 26.05.2004
(51) Int. Cl.: F16L 33/24, F16L 3/12

(54) **FASTENING SYSTEM FOR A HOSE ATTACHED TO SUPPORT**
BEFESTIGUNGSSYSTEM FÜR EINEN AUF EINER UNTERLAGE ANGEBRACHTEN SCHLAUCH
SYSTEME DE SERRAGE D'UN TUYAU FIXE A UN SUPPORT

(30) Priority: 13.06.2003 US 478378 P
(43) Date of publication of application: 15.03.2006
(73) Proprietor: Cooper-Standard Automotive, Inc., Novi, MI 48375 (US)
(72) Inventor: BALJET, Dan, Rochester Hill, MI 48309 (US); HENSON, James, R., Mount Sterling, KY 40353 (US)
(74) Representative: Shanks, Andrew
(86) International application number: PCT/US2004/016601
(87) International publication number: WO 2005/001325

(56) References cited:
- WO-A-00/77440
- WO-A-99/46531
- US-A- 4 688 829
- US-A- 5 782 090

## Description

### BACKGROUND OF THE INVENTION

The present invention relates generally to a sealing ring that secures a hose to a port of a service valve in a vehicle coolant system. More specifically, the present invention relates to a sealing ring including an integrated attachment feature that attaches the service valve to a structural element of a vehicle.

In a vehicle coolant system, a coolant absorbs heat from an engine and rejects the heat to a fluid medium in a radiator. The coolant circulates through these components and through a system of hoses. The coolant system includes a service valve including two ports that are each connected to a hose and a third port through which the coolant can be added to or removed from the coolant system. A plastic ring is molded around the joint of the hoses and the ports to provide a seal.

The service valve is secured to a structural element of the vehicle to facilitate access to the service valve and to prevent movement of the hoses. The service valve is commonly attached near the passenger compartment and under the instrument panel. A plastic tie cable having a barbed attachment feature is wrapped around the plastic ring. The cable tie can be retained on the plastic ring by an adhesive to provide additional strength.

The barbed attachment feature is inserted into an aperture in the structural element to secure the service valve to the structural element. As the barbed attachment feature is pushed through the aperture, the barbs flex, allowing the barbed attachment feature to pass through the aperture. Once inserted, the barbs return to the original position, securing the service valve to the structural element.

There are several drawbacks to the tie ring including the barbed attachment feature of the prior art. For one, it is both time consuming and costly to manually assemble the cable ties to the service valve. Additionally, the adhesive can leak onto other vehicle components.

Therefore, the present invention provides a simplified attachment of a service valve to a structural element of a vehicle by integrating an attachment feature into a sealing ring molded around a joint of a hose and a port of the service valve.

WO 99/46531 discloses a moulded hose joint assembly. Various embodiments and methods of manufacturing hose joint assemblies are disclosed.

### SUMMARY OF THE INVENTION

A vehicle coolant system includes an engine, a radiator, and a service valve including a first port, a second port and a third port. Coolant flows through the system. The coolant enters the service valve through a hose fitted on the first port and exits the service valve through a hose fitted on the second port. The coolant is added to or removed from the coolant system through the third port of the service valve.

A sealing ring having an integrated barbed attachment feature is overmolded on the joint of the hoses and the respective ports. In one example, the sealing ring and the barbed attachment feature are made of Nylon 6/6. Once the sealing ring and the barbed attachment feature are molded over the joints, the Nylon 6/6 cools and shrinks to exert a tightening force on the joints.

The barbed attachment feature includes a central boss and a plurality of barbs extending circumferentially around the central boss. Each of the plurality of barbs also includes a slit which allows the barb to flex.

The barbed attachment feature is inserted into an aperture in a structural element of a vehicle to attach the service valve to the structural element. As the barbed attachment feature is inserted into the aperture, the plurality of barbs flex towards the central boss, allowing the barbed attachment feature to pass through the aperture. After the barbed attachment feature passes through the aperture, the plurality of barbs return to the original position, securing the service valve to the structural element of the vehicle. The plurality of barbs flex in one direction to allow the barbed attachment feature to be inserted into the aperture, but are rigid in the opposing direction to prevent withdrawal of the barbed attachment feature from the aperture.

Alternatively, the sealing ring includes an integrated projection having an aperture, and the structural element includes a barbed attachment feature including a plurality of barbs extending circumferentially around a central boss. The barbed attachment feature of the structural element is inserted into the aperture in the integrated projection of the sealing ring. As the barbed attachment feature of the structural element is inserted into the aperture of the integrated projection of the sealing ring, the plurality of barbs flex towards the central boss, allowing the barbed attachment feature to pass through the aperture. After the barbed attachment feature passes through the aperture, the plurality of barbs return to the original position, securing the service valve to the structural element of the vehicle.

These and other features of the present invention will be best understood from the following specification and drawings.

### BRIEF DESCRIPTION OF THE DRAWINGS

Figure 1 schematically illustrates a coolant system of a vehicle;
Figure 2 schematically illustrates a perspective view of a service valve;
Figure 3 schematically illustrates a perspective view of hoses attached to the service valve of Figure 2;
Figure 4 schematically illustrates a perspective view of a first embodiment of the sealing ring of the present invention molded on the joint of the hoses and the service valve and including an integrated barbed attachment feature;
Figure 5 schematically illustrates a side view of a tool molding cavity located around the joint of a hose and a port of the service valve;
Figure 6 schematically illustrates a top view of one of the plurality of barbs of the barbed attachment feature; and
Figure 7 schematically illustrates a perspective view of a second embodiment of the sealing ring of the present invention.

### DETAILED DESCRIPTION OF THE PREFERRED EMBODIMENT

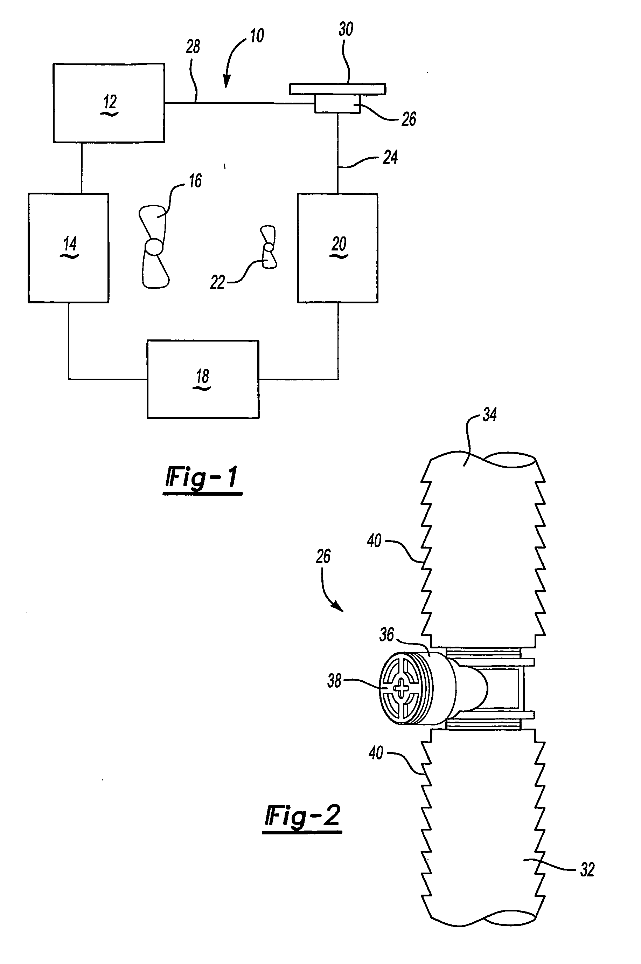

Figure 1 schematically illustrates a coolant system 10 of a vehicle. A pump 12 propels coolant into a radiator 14. A radiator fan 16 blows air over the radiator 14, and the coolant rejects heat to the surrounding air and is cooled. The coolant then flows into an engine 18 and absorbs heat from the engine 18. After exiting the engine 18, the coolant flows through a heater core 20. If a vehicle heater is activated, a heater fan 22 blows air over the heater core 20, providing heat to a passenger compartment of the vehicle and further cooling the coolant. The coolant flows through a rubber hose 24 and into a service valve 26. Coolant is added to or removed from the coolant system 10 through the service valve 26. The coolant then flows out of the service valve 26 through a rubber hose 28 and returns to the pump 12, completing the cycle. As explained below, the service valve 26 is attached to a structural element 30 of a vehicle, such as sheet metal located near the passenger compartment and under an instrument panel of the vehicle.

Figure 2 illustrates a perspective view of the service valve 26. The service valve 26 includes a first port 32 in fluid communication with the heater core 20, a second port 34 in fluid communication with the pump 12, and a third port 36 through which the coolant can be added to or removed from the coolant system 10. A cover 38 removably covers the third port 36. When coolant is to be added to or removed from the coolant system 10, the cover 38 is removed from the third port 36 to provide access to the coolant system 10. The first port 32 and the second port 34 also include contours 40 extending towards the third port 36.

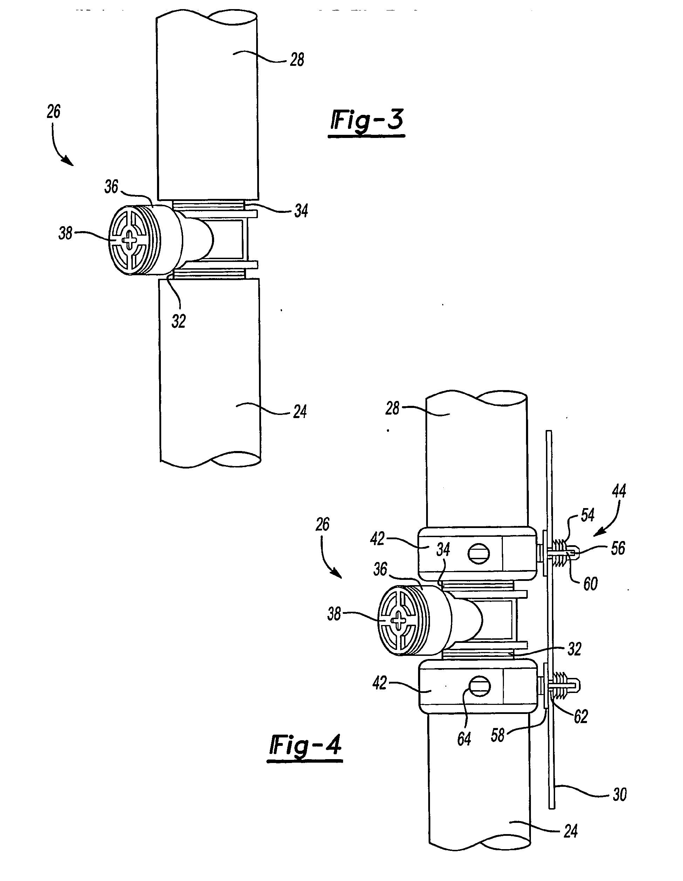

As shown in Figure 3, the first port 32 is fitted with the rubber hose 24 that receives coolant from the heater core 20, and the second port 34 is fitted with the rubber hose 28 that provides coolant to the pump 12. The contours 40 retain the rubber hoses 24 and 28 on the respective ports 32 and 34 of the service valve 26.

As shown in Figure 4, after the rubber hoses 24 and 28 are fitted over the respective ports 32 and 34 of the service valve 26, a sealing ring 42 having an integrated barbed attachment feature 44 is overmolded on the joint of each of the rubber hoses 24 and 28 and the respective port 32 and 34. The term "integrated" means that the barbed attachment feature 44 is formed in one piece with the sealing ring 42. Preferably, the sealing ring 42 and the integrated barbed attachment feature 44 are formed by an injection molding process. Preferably, the sealing ring 42 and the integrated barbed attachment feature 44 are made of Nylon 6/6. Nylon 6/6 provides suitable mechanical and physical properties. However, other materials or thermoplastics can be used to form the sealing ring 42 and the integrated barbed attachment feature 44, and one skilled in the art would know what materials to employ.

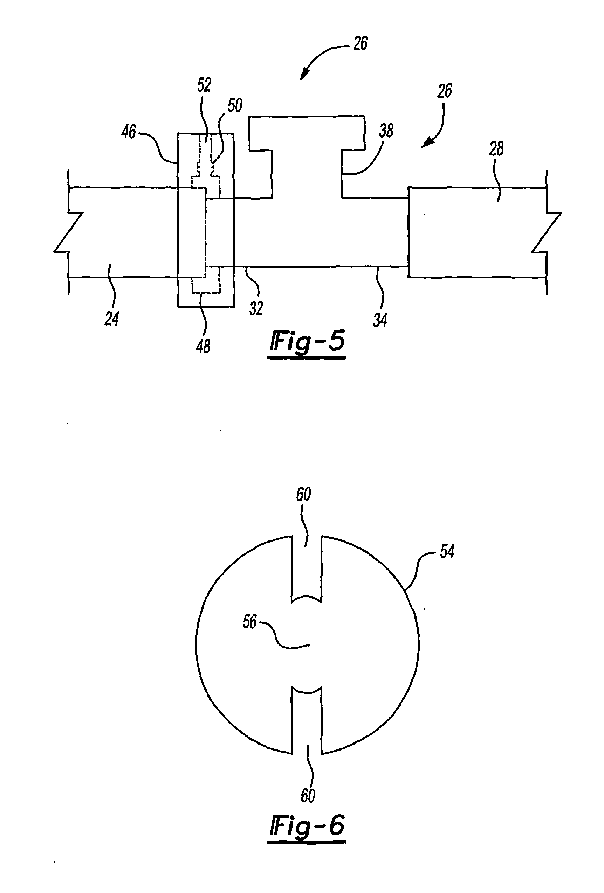

As shown in Figure 5, when forming the sealing ring 42 and the integrated barbed attachment feature 44 of the present invention, the service valve 26 is inserted into a tooling mold cavity 46. The tooling mold cavity 46 includes a cavity 48 in the shape of the sealing ring 42 and a cavity 50 in the shape of the integrated barbed attachment feature 44. Liquid Nylon 6/6 is injected through an aperture 52 in the tooling mold cavity 46, and the liquid Nylon 6/6 flows into the cavities 48 and 50. As the Nylon 6/6 cools, it shrinks and crystallizes to exert a tightening force on the joint of the rubber hoses 24 and 28 and the respective ports 32 and 34 to create a tight seal. When the Nylon 6/6 cools, the sealing ring 42 and the integrated barbed attachment feature 44 are integrated into one piece. Therefore, the adhesive of the prior art is not needed to secure the integrated barbed attachment feature 44 to the sealing ring 42.

Returning to Figure 4, each integrated barbed attachment feature 44 includes a plurality of barbs 54 extending circumferentially around a central boss 56 and a stop ring 58 also extending circumferentially around the central boss 56. Generally, the integrated barbed attachment feature 44 resembles the shape of a "pine tree," and the plurality of barbs 54 are analogous to branches. The plurality of barbs 54 extend toward the sealing ring 42. As shown in Figure 6, each of the plurality of barbs 54 includes two slits 60 which allows the plurality of barbs 54 to flex when the integrated barbed attachment feature 44 is inserted into an aperture 62 in the structural element 30. Although an integrated barbed attachment feature 44 has been illustrated and described, it is to be understood that any type of attachment feature can be integrated with the sealing ring 42 to secure the service valve 26 to the structural element 30.

After the sealing ring 42 is molded over the joint of the rubber hoses 24 and 28 and the respective ports 32 and 34, the service valve 26 is attached to the structural element 30. The integrated barbed attachment feature 44 is inserted into the aperture 62 in the structural element 30. The diameter of the aperture 62 is slightly smaller than the diameter of the integrated barbed attachment feature 44. As the integrated barbed attachment feature 44 is inserted into the aperture 62, the slits 60 allow the plurality of barbs 54 to flex towards the central boss 56 to a flexed position, allowing the integrated barbed attachment feature 44 to pass through the aperture 62. After passing through the aperture 62, the plurality of barbs 54 return to the original position. The plurality of barbs 54 are rigid, and therefore the integrated barbed attachment feature 44 cannot be removed the aperture 62. The ability of the plurality of barbs 54 to flex in one direction while being rigid in the opposing direction allows the integrated barbed attachment feature 44 to be attached to the structural element 30 while preventing the integrated barbed attachment feature 44 from being removed from the structural element 30.

The stop ring 58 halts the passage of the integrated barbed attachment feature 44 into the aperture 62 of the structural element 30. After the integrated barbed attachment feature 44 is inserted into the aperture 62, the structural element 30 is located between the plurality of barbs 54 and the stop ring 58 of the integrated barbed attachment feature 44.

The sealing ring 42 further includes an opening 64. When the sealing ring 42 is to be removed from the service valve 26, a cutting tool can be inserted into the opening 64 to cut the sealing ring 42. The sealing ring 42 can then be removed from the joint, and the service valve 26 can be then removed from the structural element 30 of the vehicle.

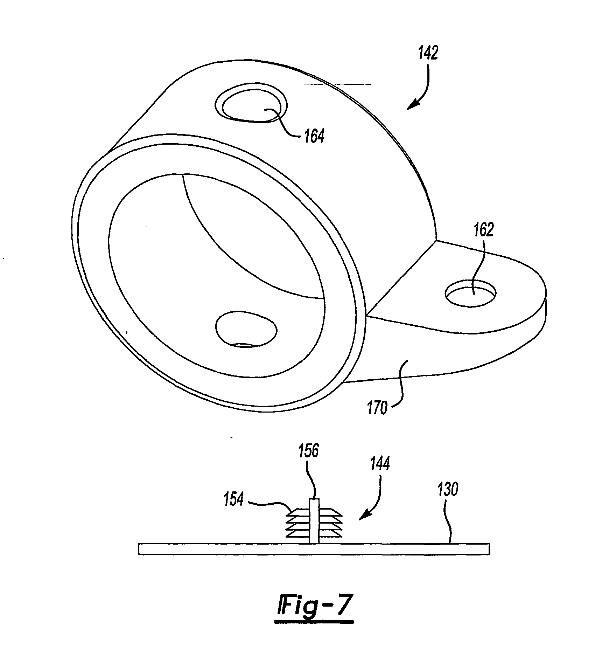

Figure 7 schematically illustrates an alternate embodiment of the sealing ring 142 of the present invention. The sealing ring 142 includes an integrated projection 170 having an aperture 162. In one example, the sealing ring 142 and the integrated projection 170 are made of Nylon 6/6 and formed by same the process described above. However, other materials can be used, and one skilled in the art would know what materials to employ to form the sealing ring 142 and the integrated projection 170.

The structural element 130 includes a barbed attachment feature 144 including a plurality of barbs 154 extending circumferentially around a central boss 156. Generally, the barbed attachment feature 144 resembles the shape of a "pine tree," and the plurality of barbs 154 are analogous to branches. The plurality of barbs 154 extend towards the structural element 130. Each of the plurality of barbs 154 includes two slits (not shown) that allow the plurality of barbs 154 to flex when the barbed attachment feature 144 is inserted into the aperture 162 in the integrated projection 170. Although a barbed attachment feature 144 has been illustrated and described, it is to be understood that the structural element 130 can include any type of attachment feature to secure the service valve 126 to the structural element 130.

When the service valve 126 is to be attached to the structural element 130, the barbed attachment feature 144 is inserted into the aperture 162 of the integrated projection 170 of the sealing ring 142. The diameter of the aperture 162 is slightly smaller than the diameter of the barbed attachment feature 144. As the barbed attachment feature 144 is inserted through the aperture 162, the plurality of barbs 154 flex towards the central boss 156 to a flexed position, allowing the barbed attachment feature 144 to advance through the aperture 162 of the integrated projection 170. After passing through the aperture 162, the plurality of barbs 154 return to the original position. The plurality of barbs 154 are rigid, and therefore the barbed attachment feature 144 resists being pulled back through the aperture 162 in the integrated projection 170.

After inserting the barbed attachment feature 144 in the aperture 162 of the integrated projection 170 of the sealing ring 142, the integrated projection 170 is located between the structural element 130 and the barbed attachment feature 144. The ability of the plurality of barbs 154 to flex in one direction while being rigid in the opposing direction allows the barbed attachment feature 144 to be attached to the integrated projection 170 while preventing the barbed attachment feature 144 from being removed from the aperture 162 in the integrated projection 170.

The sealing ring 142 further includes an opening 164. When the sealing ring 142 is to be removed from the service valve 126, a cutting tool can be inserted into the opening 164 to cut the sealing ring 142. The sealing ring 142 can then be removed from the joint, and the service valve 126 can be removed from the structural element 130 of the vehicle.

## Claims

1. An attachment apparatus comprising:
a service valve (26) including a first tubular portion (32) and a second tubular portion (34);
a first hose (24) connected to said first tubular portion (32) at a first joint;
a second hose (28) connected to said second tubular portion (34) at a second joint; and
a sealing ring (42) molded circumferentially around at least one of said first joint or said second joint, said sealing ring (42) including an integrated attachment feature (44).

2. The apparatus as recited in claim 1 wherein said service valve (26) further comprises a port (36), and coolant is added to a coolant system (10) and removed from said coolant system (10) through said port (36).

3. The apparatus as recited in claim 1 wherein said first tubular portion and said second tubular portion include a plurality of contours.

4. The apparatus as recited in claim 1 wherein said sealing ring (42) and said integrated attachment feature (44) are integrated into one piece.

5. The apparatus as recited in claim 1 wherein said sealing ring (42) and said integrated attachment feature (44) are made of Nylon 6/6.

6. The apparatus as recited in claim 1 wherein said sealing ring (42) further includes a hole (64), and a cutting tool is insertable in said hole (64) to remove said sealing ring (42) from said service valve (26).

7. The apparatus as recited in claim 1 wherein said sealing ring (42) comprises a first sealing ring and a second sealing ring, and said first sealing ring is molded circumferentially around said first joint and said second sealing ring is molded circumferentially around said second joint.

8. The apparatus as recited in claim 1 wherein said integrated attachment feature is a barbed attachment feature (44) comprising a central boss (56) and a plurality of barbs (54) extending circumferentially around said central boss (56).

9. The apparatus as recited in claim 8 wherein each of said plurality of barbs (54) further include a slit (60).

10. The apparatus as recited in claim 8 wherein said plurality of barbs (54) extend towards said sealing ring (42).

11. The apparatus as recited in claim 8 wherein said barbed attachment feature (44) further comprises a stop ring (58) extending circumferentially around said central boss (56).

12. The apparatus as recited in claim 1 further comprising a vehicle component (30) including an aperture (62), and said integrated attachment feature (44) is inserted into said aperture (62) of said vehicle component (30) to attach said service valve (26) to said vehicle component (30),

13. The apparatus as recited in claim 12 wherein said integrated attachment feature is a barbed attachment feature comprising a central boss and a plurality of barbs extending circumferentially around said central boss.

14. The apparatus as recited in claim 13 wherein said barbed attachment feature (44) further comprises a stop ring (58) extending circumferentially around said central boss (56).

15. The apparatus as recited in claim 14 wherein said central boss (56) is located in said aperture (62) of said vehicle component (30) when said service valve (26) is attached to said vehicle component (30), and said plurality of barbs (54) are located on a first side of said vehicle component (30) and said stop ring (58) is located on an opposing second side of said vehicle component (30).

16. The apparatus as recited in claim 13 wherein said plurality of barbs (54) are in a flexed position when said barbed protrusion (44) is inserted into said aperture (62) of said vehicle component (30) and said plurality of barbs (54) are in a non-flexed position after said barbed protrusion (44) is inserted into said aperture (62) of said vehicle component (30).

17. The apparatus as recited in claim 16 said barbed attachment feature (44) has a non-flexed diameter when said plurality of barbs (54) are in said non-flexed position and a flexed diameter when said plurality of barbs (54) are in said flexed position and said aperture (62) has an aperture diameter, and said non-flexed diameter is greater than said aperture diameter.

18. The apparatus as recited in claim 1 wherein said integrated attachment feature (44) of said sealing ring (142) is a projection (170) having an aperture (162).

19. The apparatus as recited in claim 18 further comprising a vehicle component (130) including a barbed attachment feature (144) having a plurality of barbs (154) extending circumferentially around a central boss (156), and said barbed attachment feature (144) of said vehicle component (130) is insertable in said aperture (162) of said projection (170) of said integrated attachment feature (44) of said sealing ring (142) to secure said service valve (26) to said vehicle component (30).

20. The apparatus as recited in claim 19 wherein said plurality of barbs (54) are in a flexed position when said barbed protrusion (44) is inserted into said aperture (162) and said plurality of barbs are in a non-flexed position after said barbed protrusion is inserted to said aperture.

21. The apparatus as recited in claim 20 wherein said barbed attachment feature has a non-flexed diameter when in said non-flexed position, a flexed diameter when in said flexed position and said aperture has an aperture diameter, and said non- flexed diameter is greater than said aperture diameter.

22. A vehicle coolant system (10) comprising :
an engine (18), and a coolant that accepts heat from the engine (18);
a radiator (14), and the coolant in the radiator (14) rejects heat to a fluid medium;
a vehicle component including an aperture; and
the apparatus of any of claim 1, claim 5 or claim 8, wherein the integrated attachment feature is configured for insertion in the aperture of the vehicle component to attach the service valve to the vehicle component, and the sealing ring and the integrated attachment feature are integrated into one piece.

23. A method of forming a sealing component comprising the steps of:
attaching a first hose to a first tubular portion of a service valve at a first joint ;
attaching a second hose to a second tubular portion of the service valve at a second joint;
positioning a mold around at least one of the first joint and the second joint, the mold including a cavity that defines a sealing ring and an integrated attachment feature;
injecting a liquid plastic material into the mold; and
cooling and shrinking the liquid plastic material around the at least one of the first joint and the second joint to form a solid plastic material defining the sealing ring and the integrated attachment feature, and the sealing ring and the integrated attachment feature are integrated into one piece.

24. The method as recited in claim 23 wherein the liquid plastic material is Nylon 6/6.

25. The method as recited in claim 23 wherein the integrated attachment feature is a barbed attachment feature including a central boss and a plurality of barbs extending circumferentially around the central boss.

26. The apparatus as recited in claim 1 wherein the molded ring is molded over the first hose.

27. The apparatus as recited in claim 1 wherein the molded ring defmes a radially extending aperture.

28. The apparatus as recited in claim 1 wherein the molded ring has a constant radial distance from the component.

29. The apparatus as recited in claim 1, wherein the molded ring is uninterrupted as the molded ring surrounds the first component.

30. The apparatus as recited in claim 1, wherein the molded ring has a constant thickness with respect to a central axis of the first component.

## Patentansprüche

1. Befestigungsvorrichtung, die aufweist:
ein Serviceventil (26), das einen ersten rohrförmigen Abschnitt (32) und einen zweiten rohrförmigen Abschnitt (34) umfasst;
einen ersten Schlauch (24), der mit dem ersten rohrförmigen Abschnitt (32) an einer ersten Verbindung verbunden ist;
einen zweiten Schlauch (28), der mit dem zweiten rohrförmigen Abschnitt (34) an einer zweiten Verbindung verbunden ist; und
einen Dichtungsring (42), der peripher um mindestens eine von erster Verbindung oder zweiter Verbindung geformt ist, wobei der Dichtungsring (42) ein integriertes Befestigungsmerkmal (44) umfasst.

2. Vorrichtung nach Anspruch 1, bei der das Serviceventil (26) außerdem einen Anschluss (36) aufweist und Kühlmittel zu einem Kühlmittelsystem (10) zugegeben und aus dem Kühlmitfelsystem (10) durch den Anschluss (36) entfernt wird.

3. Vorrichtung nach Anspruch 1, bei der der erste rohrförmige Abschnitt und der zweite rohrförmige Abschnitt eine Vielzahl von Konturen umfassen.

4. Vorrichtung nach Anspruch 1, bei der der Dichtungsring (42) und das integrierte Befestigungsmerkmal (44) zu einem Teil zusammengefasst sind.

5. Vorrichtung nach Anspruch 1, bei der der Dichtungsring (42) und das integrierte Befestigungsmerkmal (44) aus Nylon 6/6 bestehen.

6. Vorrichtung nach Anspruch 1 bei der der Dichtungsring (42) außerdem ein Loch (64) umfasst, und wobei ein Schneidwerkzeug in das Loch (64) eingesetzt werden kann, um den Dichtungsring (42) vom Serviceventil (26) zu entfernen.

7. Vorrichtung nach Anspruch 1, bei der der Dichtungsring (42) einen ersten Dichtungsring und einen zweiten Dichtungsring aufweist, und wobei der erste Dichtungsring peripher um die erste Verbindung geformt ist und der zweite Dichtungsring peripher um die zweite Verbindung geformt ist.

8. Vorrichtung nach Anspruch 1, bei der das integrierte Befestigungsmerkmal ein mit Widerhaken versehenes Befestigungsinerkmal (44) ist, das eine mittlere Nabe (56) und eine Vielzahl von Widerhaken (54) aufweist, die sich peripher um die mittlere Nabe (56) herum erstrecken.

9. Vorrichtung nach Anspruch 8, bei der ein jeder der Vielzahl von Widerhaken (54) außerdem einen Schlitz (60) umfasst.

10. Vorrichtung nach Anspruch 8, bei der sich die Vielzahl der Widerhaken (54) in Richtung des Dichtungsringes (42) erstreckt.

11. Vorrichtung nach Anspruch 8, bei der das mit Widerhaken versehene Befestigungsmerkmal (44) außerdem einen Anschlagring (58) aufweist, der sich peripher um die mittlere Nabe (56) herum erstreckt.

12. Vorrichtung nach Anspruch 1, die außerdem ein Fahrzeugbauteil (30) aufweist, das eine Öffnung (62) umfasst, und bei der das integrierte Befestigungsmerkmal (44) in die Öffnung (62) des Fahrzeugbauteils (30) eingesetzt wird, um das Serviceventil (26) am Fahrzeugbauteil (30) zu befestigen.

13. Vorrichtung nach Anspruch 12, bei der das integrierte Befestigungsmerkmal ein mit Widerhaken versehenes Befestigungsmerkmal ist, das eine mittlere Nabe und eine Vielzahl von Widerhaken aufweist, die sich peripher um die mittlere Nabe herum erstrecken.

14. Vorrichtung nach Anspruch 13, bei der das mit Widerhaken versehene Befestigungsmerkmal (44) außerdem einen Anschlagring (58) aufweist, der sich peripher um die mittlere Nabe (56) herum erstreckt.

15. Vorrichtung nach Anspruch 14, bei der die mittlere Nabe (56) in der Öffnung (62) des Fahrzeugbauteils (30) angeordnet wird, wenn das Serviceventil (26) am Fahrzeugbauteil (30) befestigt wird, und bei der die Vielzahl der Widerhaken (54) auf einer ersten Seite des Fahrzeugbauteils (30) angeordnet wird und der Anschlagring (58) auf einer entgegengesetzten zweiten Seite des Fahrzeugbauteils (30) angeordnet wird.

16. Vorrichtung nach Anspruch 13, bei der die Vielzahl der Widerhaken (54) in einer durchgebogenen Position ist, wenn der mit Widerhaken versehene Vorsprung (44) in die Öffnung (62) des Fahrzeugbauteils (30) eingesetzt wird, und bei der die Vielzahl der Widerhaken (54) in einer nicht durchgebogenen Position ist, nachdem der mit Widerhaken versehene Vorsprung (44) in die Öffnung (62) des Fahrzeugbauteils (30) eingesetzt wurde.

17. Vorrichtung nach Anspruch 16, bei der das mit Widerhaken versehene Befestigungsmerkmal (44) einen nicht durchgebogenen Durchmesser aufweist, wenn sich die Vielzahl der Widerhaken (54) in der nicht durchgebogenen Position befindet, und einen durchgebogenen Durchmesser, wenn sich die Vielzahl der Widerhaken (54) in der durchgebogenen Position befindet, und bei der die Öffnung (62) einen Öffnungsdurchmesser aufweist und der nicht durchgebogene Durchmesser größer ist als der Öffnungsdurchmesser.

18. Vorrichtung nach Anspruch 1, bei der das integrierte Befestigungsmerkmal (44) des Dichtungsringes (142) ein Vorsprung (170) mit einer Öffnung (162) ist.

19. Vorrichtung nach Anspruch 18, die außerdem ein Fahrzeugbauteil (130) aufweist, das ein mit Widerhaken versehenes Befestigungsmerkmal (144) mit einer Vielzahl von Widerhaken (154) umfasst, die sich peripher um eine mittlere Nabe (156) herum erstreckt, und bei der das mit Widerhaken versehene Befestigungsmerkmal (144) des Fahrzeugbauteils (130) in die Öffnung (162) des Vorsprungs (170) des integrierten Befestigungsmerkmals (44) des Dichtungsringes (142) eingesetzt werden kann, um das Serviceventil (26) am Fahrzeugbauteil (30) zu sichern.

20. Vorrichtung nach Anspruch 19, bei der die Vielzahl der Widerhaken (54) in einer durchgebogenen Position ist, wenn der mit Widerhaken versehene Vorsprung (44) in die Öffnung (162) eingesetzt wird, und bei der die Vielzahl der Widerhaken in einer nicht durchgebogenen Position ist, nachdem der mit Widerhaken versehene Vorsprung in die Öffnung eingesetzt wurde.

21. Vorrichtung nach Anspruch 20, bei der das mit Widerhaken versehene Befestigungsmerkmal einen nicht durchgebogenen Durchmesser aufweist, wenn es sich in der nicht durchgebogenen Position befindet, einen durchgebogenen Durchmesser, wenn es sich in der durchgebogenen Position befindet, und bei der die Öffnung einen Öffnungsdurchmesser aufweist und der nicht durchgebogene Durchmesser größer ist als der Öffnungsdurchmesser.

22. Kühlmittelsystem (10) für ein Fahrzeug, das aufweist:
einen Motor (18) und ein Kühlmittel, das Wärme vom Motor (18) aufnimmt;
einen Kühler (14), und wobei das Kühlmittel im Kühler (14) die Wärme an ein strömungsfähiges Medium zurück abgibt;
ein Fahrzeugbauteil, das eine Öffnung umfasst; und
die Vorrichtung nach einem von Anspruch 1, Anspruch 5 oder Anspruch 8, bei der das integrierte Befestigungsmerkmal für ein Einsetzen in die Öffnung des Fahrzeugbauteils ausgebildet ist, um das Serviceventil am Fahrzeugbauteil zu befestigen, und wobei der Dichtungsring und das integrierte Befestigungsmerkmal zu einem Teil zusammengefasst sind.

23. Verfahren zur Herstellung eines Dichtungsbauteils, das die folgenden Schritte aufweist:
Befestigen eines ersten Schlauches an einem ersten rohrförmigen Abschnitt eines Serviceventils an einer ersten Verbindung;
Befestigen eines zweiten Schlauches an einem zweiten rohrförmigen Abschnitt des Serviceventils an einer zweiten Verbindung;
Positionieren einer Form um mindestens eine von erster Verbindung und zweiter Verbindung, wobei die Form einen Hohlraum umfasst, der den Dichtungsring und ein integriertes Befestigungsmerkmal definiert;
Einspritzen eines flüssigen Kunststoffmaterials in die Form; und
Abkühlen und Schrumpfen des flüssigen Kunststoffmaterials um die mindestens eine von erster Verbindung und zweiter Verbindung, um ein festes Kunststoffinaterial zu formen, das den Dichtungsring und das integrierte Befestigungsmerkmal definiert, und wobei der Dichtungsring und das integrierte Befestigungsmerkmal zu einem Teil zusammengefasst werden.

24. Verfahren nach Anspruch 23, bei dem das flüssige Kunststoffmaterial Nylon 6/6 ist.

25. Verfahren nach Anspruch 23, bei dem das integrierte Befestigungsmerkmal ein mit Widerhaken versehenes Befestigungsmerkmal ist, das eine mittlere Nabe und eine Vielzahl von Widerhaken umfasst, die sich peripher um die mittlere Nabe herum erstrecken.

26. Vorrichtung nach Anspruch 1, bei der der geformte Ring über den ersten Schlauch geformt wird.

27. Vorrichtung nach Anspruch 1, bei der der geformte Ring eine sich radial erstreckende Öffnung definiert.

28. Vorrichtung nach Anspruch 1, bei der der geformte Ring einen konstanten radialen Abstand vom Bauteil aufweist.

29. Vorrichtung nach Anspruch 1, bei der der geformte Ring ununterbrochen ist, während der geformte Ring das erste Bauteil umgibt.

30. Vorrichtung nach Anspruch 1, bei der der geformte Ring eine konstante Dicke mit Bezugnahme auf eine mittlere Achse des ersten Bauteils aufweist.

## Revendications

1. Dispositif de fixation, comprenant:
une soupape d'alimentation (26), englobant une première partie tubulaire (32) et une deuxième partie tubulaire (34) ;
un premier tuyau (24) connecté à ladite première partie tubulaire (32) au niveau d'un premierjoint ;
un deuxième tuyau (28), connecté à ladite deuxième partie tubulaire (34) au niveau d'un deuxième joint ; et
une bague d'étanchéité (42), moulée de manière circonférentielle autour d'au moins un desdits premier et deuxième joints, ladite bague d'étanchéité (42) englobant une structure de fixation intégrée (44).

2. Dispositif selon la revendication 1, dans lequel ladite soupape d'alimentation (26) comprend en outre un orifice (36), un liquide de refroidissement étant ajouté à un système de refroidissement (10) et étant retiré dudit système de refroidissement (10) à travers ledit orifice (36).

3. Dispositif selon la revendication 1, dans lequel ladite première partie tubulaire et ladite deuxième partie tubulaire englobent plusieurs contours.

4. Dispositif selon la revendication 1, dans lequel ladite bague d'étanchéité (42) et ladite structure de fixation intégrée (44) sont intégrées en une seule pièce.

5. Dispositif selon la revendication 1, dans lequel ladite bague d'étanchéité (42) et ladite structure de fixation intégrée (44) sont composées de nylon 6/6.

6. Dispositif selon la revendication 1, dans lequel ladite bague d'étanchéité (42) englobe en outre un trou (64), un outil de coupe pouvant être inséré dans ledit trou (64) pour retirer ladite bague d'étanchéité (42) de ladite soupape d'alimentation (26).

7. Dispositif selon la revendication 1, dans lequel ladite bague d'étanchéité (42) comprend une première bague d'étanchéité et une deuxième bague d'étanchéité, ladite première bague d'étanchéité étant moulée de manière circonférentielle autour dudit premier joint, et ladite deuxième bague d'étanchéité étant moulée de manière circonférentielle autour dudit deuxième joint.

8. Dispositif selon la revendication 1, dans lequel ladite structure de fixation intégrée est une structure de fixation barbelée (44), comprenant un bossage central (56) et plusieurs barbes (54), s'étendant de manière circonférentielle autour dudit bossage central (56).

9. Dispositif selon la revendication 8, dans lequel chacune desdites plusieurs barbes (54) englobe en outre une fente (60).

10. Dispositif selon la revendication 8, dans lequel lesdites plusieurs barbes (54) s'étendent vers ladite bague d'étanchéité (42).

11. Dispositif selon la revendication 8, dans lequel ladite structure de fixation barbelée (44) comprend en outre une bague de butée (58), s'étendant de manière circonférentielle autour dudit bossage central (56).

12. Dispositif selon la revendication 1, comprenant en outre un composant de véhicule (30), englobant une ouverture (62), ladite structure de fixation intégrée (44) étant insérée dans ladite ouverture (62) dudit composant du véhicule (30) pour fixer ladite soupape d'alimentation (26) audit composant du véhicule (30).

13. Dispositif selon la revendication 12, dans lequel ladite structure de fixation intégrée est une structure de fixation barbelée, comprenant un bossage central et plusieurs barbes, s'étendant de manière circonférentielle autour dudit bossage central.

14. Dispositif selon la revendication 13, dans lequel ladite structure de fixation barbelée (44) comprend en outre une bague de butée (58), s'étendant de manière circonférentielle autour dudit bossage central (56).

15. Dispositif selon la revendication 14, dans lequel ledit bossage central (56) est agencé dans ladite ouverture (62) dudit composant du véhicule (30) lorsque ladite soupape d'alimentation (26) est fixée sur ledit composant du véhicule (30), lesdites plusieurs barbes (54) étant agencées sur un premier côté dudit composant du véhicule (30) et ladite bague de butée (58) étant agencée sur un deuxième côté opposé dudit composant du véhicule (30).

16. Dispositif selon la revendication 13, dans lequel lesdites plusieurs barbes (54) se trouvent dans une position fléchie lorsque ladite saillie barbelée (44) est insérée dans ladite ouverture (62) dudit composant du véhicule (30), lesdites plusieurs barbes (54) se trouvant dans une position non fléchie après l'insertion de ladite saillie barbelée (44) dans ladite ouverture (62) dudit composant du véhicule (30).

17. Dispositif selon la revendication 16, dans lequel ladite structure de fixation barbelée (44) a un diamètre non fléchi lorsque lesdites plusieurs barbes (54) se trouvent dans ladite position non fléchie, et un diamètre fléchi lorsque lesdites plusieurs barbes (54) se trouvent dans ladite position fléchie, ladite ouverture (62) ayant un diamètre d'ouverture, ledit diamètre non fléchi étant supérieur audit diamètre de l'ouverture.

18. Dispositif selon la revendication 1, dans lequel ladite structure de fixation intégrée (44) de ladite bague d'étanchéité (142) est constituée par une saillie (170) comportant une ouverture (162).

19. Dispositif selon la revendication 18, comprenant en outre un composant de véhicule (130), englobant une structure de fixation barbelée (144) comportant plusieurs barbes (154), s'étendant de manière circonférentielle autour d'un bossage central (156), ladite structure de fixation barbelée (144) dudit composant du véhicule (130) pouvant être insérée dans ladite ouverture (162) de ladite saillie (170) de ladite structure de fixation intégrée (44) de ladite bague d'étanchéité (142) pour fixer ladite soupape d'alimentation (26) sur ledit composant du véhicule (30).

20. Dispositif selon la revendication 19, dans lequel lesdites plusieurs barbes (54) se trouvent dans une position fléchie lorsque ladite saillie barbelée (44) est insérée dans ladite ouverture (162), lesdites plusieurs barbes se trouvant dans une position non fléchie après l'insertion de ladite saillie barbelée dans ladite ouverture.

21. Dispositif selon la revendication 20, dans lequel ladite structure de fixation barbelée a un diamètre non fléchi dans ladite position non fléchie et un diamètre fléchi dans ladite position fléchie, ladite ouverture ayant un diamètre d'ouverture, ledit diamètre non fléchi étant supérieur audit diamètre de l'ouverture.

22. Système de refroidissement d'un véhicule (10), comprenant :
un moteur (18) et un liquide de refroidissement recevant la chaleur du moteur (18) ;
un radiateur (14), le liquide de refroidissement dans le radiateur (14) rejetant la chaleur vers un milieu de fluide ;
un composant du véhicule, englobant une ouverture ; et
le dispositif selon l'une quelconque des revendications 1, 5 ou 8, dans lequel la structure de fixation intégrée est configurée en vue d'une insertion dans l'ouverture du composant du véhicule, pour fixer la soupape d'alimentation sur le composant du véhicule, la bague d'étanchéité et la structure de fixation intégrée étant intégrées en une seule pièce.

23. Procédé de formation d'un composant d'étanchéité, comprenant les étapes ci-dessous :
fixation d'un premier tuyau sur une première partie tubulaire d'une soupape d'alimentation au niveau d'un premier joint ;
fixation d'un deuxième tuyau sur une deuxième partie tubulaire de la soupape d'alimentation au niveau d'un deuxième joint ;
positionnement d'un moule autour d'au moins un des premier et deuxième joints, le moule englobant une cavité définissant une bague d'étanchéité et une structure de fixation intégrée ;
injection d'un matériau plastique liquide dans le moule ; et
refroidissement et contraction du matériau plastique liquide autour du moins un des premier et deuxième joints pour former un matériau plastique solide définissant la bague d'étanchéité et la structure de fixation intégrée, la bague d'étanchéité et la structure de fixation intégrée étant intégrées en une seule pièce.

24. Procédé selon la revendication 23, dans lequel le matériau plastique liquide est du nylon 6/6.

25. Procédé selon la revendication 23, dans lequel la structure de fixation intégrée est une structure de fixation barbelée, englobant un bossage central et plusieurs barbes s'étendant de manière circonférentielle autour du bossage central.

26. Dispositif selon la revendication 1, dans lequel la bague moulée est moulée au-dessus du premier tuyau.

27. Dispositif selon la revendication 1. dans lequel la bague moulée définit une ouverture à extension radiale.

28. Dispositif selon la revendication 1, dans lequel la bague moulée est située à une distance radiale constante du composant.

29. Dispositif selon la revendication 1, dans lequel la bague moulée est ininterrompue, la bague moulée entourant le premier composant.

30. Dispositif selon la revendication 1, dans lequel la bague moulée a une épaisseur constante par rapport à un axe central du premier composant.
